# EUROPEAN PATENT SPECIFICATION

(11) **EP 3 123 881 B1**
(45) Date of publication and mention of the grant of the patent: **21.11.2018**
(21) Application number: 16179460.7
(22) Date of filing: 14.07.2016
(51) Int. Cl.: A41B 11/14, B29C 65/00, D05B 23/00

(54) **APPARATUS AND METHOD FOR THE PRODUCTION OF PANTYHOSE WITHOUT STITCHING ON THE BODY PIECE**
VORRICHTUNG UND VERFAHREN ZUR HERSTELLUNG EINER STRUMPFHOSE OHNE ABSTEPPUNG AM KÖRPERTEIL
APPAREIL ET PROCÉDÉ POUR LA PRODUCTION DE COLLANT SANS COUTURE SUR LA PIÈCE DE CORPS

(30) Priority: 28.07.2015 IT UB20152946
(43) Date of publication of application: 01.02.2017
(73) Proprietor: Boggiani Renato S.r.l., 46042 Castel Goffredo (MN) (IT)
(72) Inventor: BOGGIANI, Francesco, 46042 Castel Goffredo (MN) (IT)
(74) Representative: Raimondi, Margherita

(56) References cited:
- EP-A1- 1 748 103
- DE-A1- 2 145 511
- DE-A1- 4 426 817
- GB-A- 2 153 860
- KR-A- 20150 019 907
- US-A- 4 620 650
- US-A- 5 915 316

## Description

The present invention is applicable to the technical sector of hosiery and relates to an apparatus and a method for the production of pantyhose. In particular, but not exclusively, the present invention relates to the manufacture of pantyhose having a body piece without stitching.

As is known, nowadays there exist various system for manufacturing pantyhose which, leaving aside the different trade names, are based on the principle of assembling the various components of the pantyhose by means of stitching.

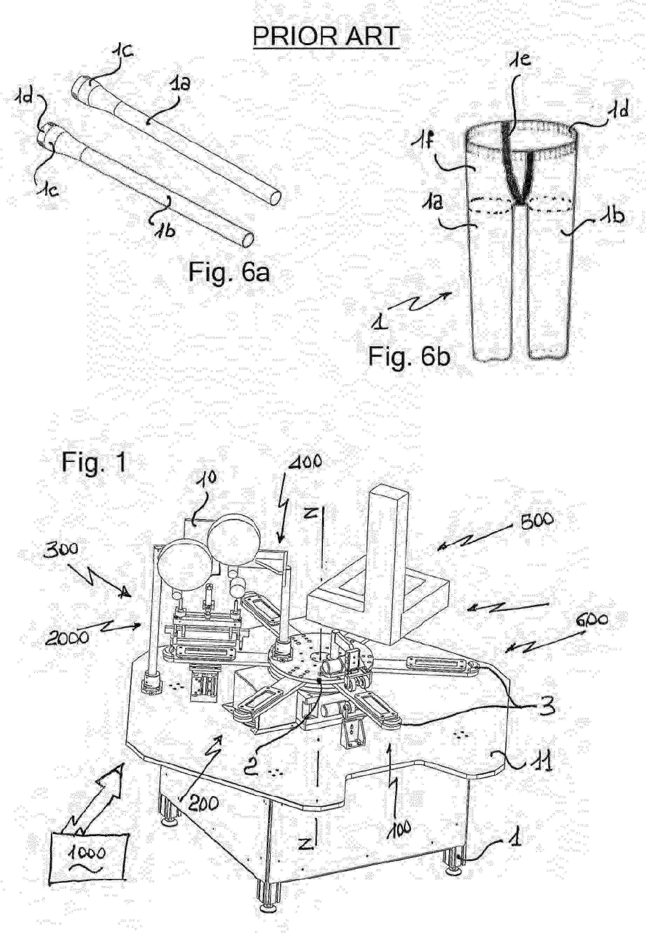

As shown in Figs. 6a,6b, a pantyhose according to the prior art is produced from two round, tubular, textile articles 1a, 1b of fabric (nylon, cotton and the like) or a "non-woven fabric", which have open opposite ends and an elastic strip 1d at only one 1c of the two ends. According to the prior art, the single tubular elements are loaded onto a machine called a "line-closer"; this machine comprises a carousel structure rotating about a vertical axis and provided with a plurality of special forms.

The two tubular articles which form the pantyhose are loaded onto a pair of adjacent forms and, in successive line-closer stations, are subject to a longitudinal cut, along a portion which comprises the end with the elastic strip 1d and which, in the finished product, will form the body piece, namely the part which will be situated opposite the user's belly so as to support the entire pantyhose 1. Then a stitching joining together the two tubular elements is performed along the previously cut sections.

In this way a pantyhose 1 with a longitudinal stitch 1e on the body piece 1f is obtained (Fig. 6b).

It is also known that, during the manufacture of hold-up stockings, specific thermoplastic materials are applied on the inner side thereof so that, by adhering to the skin of the leg and because of their elasticity, they prevent the stocking from falling down, ensuring a stable position on the leg.

Said application usually takes place after prior heating of the thermoplastic material which, melting inside the meshes of the stocking fibres, ensures an optimum elasticity and strength.

The known solutions for the manufacture of pantyhose described above nevertheless have a number of disadvantages and drawbacks.

Firstly, the known solutions are provided with stitches for assembly of the body piece, and this may influence the quality of the finished product, both from an aesthetic point of view and from a functional point of view, affecting the comfort when the pantyhose is worn. The stitching may moreover influence the working life of the pantyhose with the possibility, following this operation, of weak points being created in the meshwork of the knitted article. Finally, the known solutions require the assembly of two tubular textile articles in order to manufacture the top part of the pantyhose.

Examples of the prior art are described in US-4 620 650, GB-2 153 860, KR-2015 0019907 and US-5 915 316. The preamble of Claim 1 is based on GB 2 153 860 A**.**

The object of the present invention is to overcome one or more of the aforementioned drawbacks. One object of the invention is to provide an apparatus and a method for the production of pantyhose which have the body piece incorporated without stitching, resulting in high-quality textile articles which are substantially flawless.

Another object of the invention is to provide an apparatus and a method for the production of pantyhose which are able to provide a pantyhose which is ergonomically comfortable since it does not have projections due to the stitches on the pantyhose itself.

Another object of the invention is to provide an apparatus and a method for the production of pantyhose which are able to reduce the number of production rejects due to errors in the stitching. Another object of the invention is to provide an apparatus and a method for the production of pantyhose which are able to eliminate the stitches performed for the production of the body pieces of the pantyhose which may be unattractive.

Another object of the invention is to provide an apparatus and a method for the production of pantyhose which are able to achieve a high degree of productive uniformity between the different pantyhose produced and/or obtain a high productivity in terms of the number of pantyhose produced per unit of time.

Another object of the invention is to provide an apparatus and a method for the production of pantyhose which are able to produce body pieces in a simple and/or rapid and/or automatic and/or low-cost manner. Another object of the invention is to provide an apparatus for the production of pantyhose which is simple and strong and can be produced at a low cost.

These and other objects which will be explained more clearly during the course of the description below are substantially achieved by an apparatus for the production of pantyhose having a body piece without stitching according to the characteristic features of Claim 1 and by a method for the production of pantyhose having a body piece without stitching, according to the characteristic features of Claim 13.

Further characteristic features and advantages of the invention will emerge more clearly from the detailed description of a preferred, but not exclusive embodiment illustrated by way of a nonlimiting example with the aid of the attached illustrations in which:
Figure 1: shows an overall view of an apparatus for the production of pantyhose according to the present invention;
Figure 2: shows a top plan view of the apparatus;
Figure 3: shows a view of the station 100 for loading the textile material which will form the pantyhose;
Figure 4: shows a view of the station 300 for the operation of applying thermoplastic material onto the textile article;
Figures 5a-5c: show the composition of the pantyhose during the various steps of the method;
Figures 6a,6b: show schematic views of tubular articles and of a pantyhose according to the prior art.

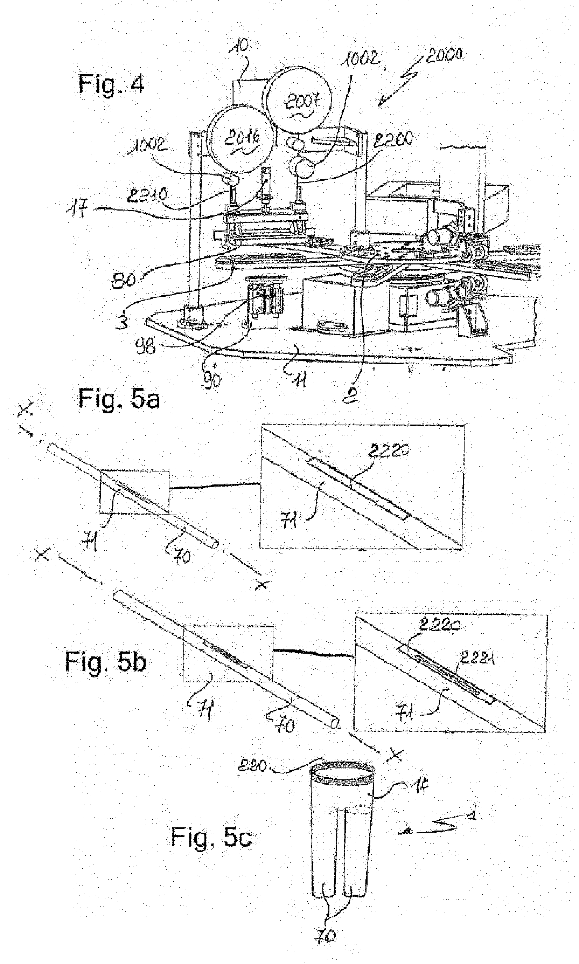

As shown in Figure 1, the apparatus according to the invention for the production of pantyhose as one piece without stitching on the body piece, from a tubular element 70 (Fig. 5a) extending in a longitudinal lengthwise direction X-X and provided with a substantially central part 71 designed to form the body piece of the finished pantyhose, comprises a support frame 1 having, fixed thereon, a work surface 11 with, mounted thereon, a table 2 rotating about a vertical axis Z-Z.

Driving of the rotating table 2 is performed by known means 4 comprising a gear motor, the speed of which is controlled by electronic control and command means 1000 which may also be connected to sensors and actuators which regulate operation of the apparatus.

The rotating table 2 is provided with a plurality of attachments which have, fastened to them, locating elements or templates 3 extending in radial directions and angularly spaced from each other by a suitable angle.

In the example shown six templates 3 are provided and the angle between two successive templates is 60 degrees.

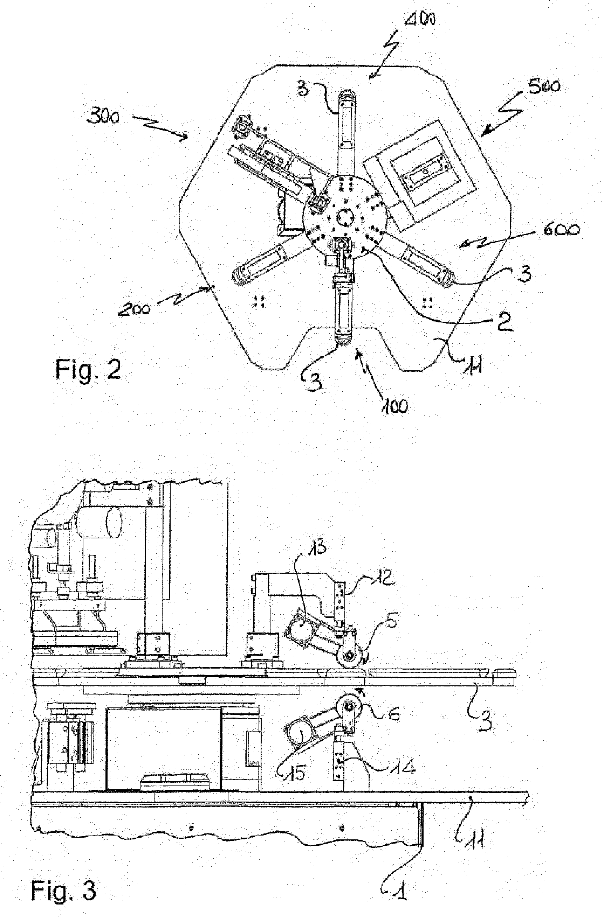

As shown in Figs. 1 and 2, the apparatus according to the invention comprises a plurality of workstations which are in turn angularly spaced from each other by suitable angles.

The apparatus according to the invention comprises at least five workstations, i.e.:
a station 100 for loading the pantyhose;
a station 300 for applying a thermoplastic film;
a cooling station 400;
a cutting station 500; and
an unloading station 600.

In the preferred example shown, the apparatus comprises a further sixth empty station 200 which may be set up for other auxiliary operations.

In the figures, the parts of the apparatus not explicitly shown may be of the type known per se and therefore are not described in detail.

The textile article necessary for the manufacture of the pantyhose with the present apparatus is, as mentioned, formed by a tubular element 70 which is open at the opposite ends and which may have a different length and dimensions, depending on the sizes to be produced, and a substantially central section 71 designed to form the body piece of the finished product.

As shown in Figure 3, the loading station 100, where the operator applies the tubular element 70 onto the template 3, comprises a pair of rollers 5, 6 with a horizontal axis Y-Y which are respectively positioned above and below the template 3.

The rollers 5,6 are rotated by a belt system which is connected to two gear motors, i.e. a gear motor 13 for the top roller and a gear motor 15 for the bottom roller, which are controlled by electronic means 1000.

The rollers 5,6 are moreover connected to a respective actuator 12,14 designed to move the respective roller from a raised position for separation from the template 3 to a lowered position for making contact with the template 3.

When the tubular element 70 is mounted on the template 3 by the operator, the two rollers 5,6 are simultaneously made to rotate and moved towards the template 3 coming into contact with the tubular element 70, which is drawn towards the vertical axis Z-Z, facilitating insertion thereof; the tubular element is then inserted and correctly positioned so that the central portion 71 coincides in the radial direction with the central part of the template 3.

Once positioning of the article has been completed, the two rollers 5,6 stop rotating and are moved in the opposite direction towards their position removed from the template 3.

According to a preferred aspect of the invention, it is envisaged that the film 2200 to be applied to the tubular article 70 is in the form of a strip wound up on a reel and comprises a backing strip 2210 and a thermoplastic strip 2220 with a melting temperature lower than that of the backing strip. The station 300 for applying the thermoplastic film has an associated film application device 2000 which comprises means for feeding the film 2200; preferably said feeding means comprise at least one circular reel 2007 which carries the film 2200 and at least one motorized reel 2016 for retrieving the film 2200 guided along its path by guide rollers 1002.

The film application device further comprises a presser plate 80 arranged between the rollers for moving the film 2200 and the template 3; the presser plate 80 is movable, upon actuation of a specific electromechanical or pneumatic actuator 17, from a raised position spaced from the template 3 into a lowered position for pressing against the said template.

The presser plate 80 also has heating means, such as electric resistances or other alternative system, designed to melt the thermoplastic strip, but not the backing strip.

When the tubular textile article arrives, the motorized reel 2016 retrieves a portion of film 2200 until the backing strip 2210 carrying the thermoplastic film strip 2220 to be applied to the central section 71 of the tubular element (Fig. 6a) is positioned underneath the presser plate 80. The film is positioned so that the thermoplastic strip is directed towards the textile article, namely downwards.

Application is performed by means of the downwards movement of the presser plate 80 which comprises the film carrying the thermoplastic strip 2220 against the textile article and heats it, allowing melting thereof.

The heating temperature depends on the material used and allows melting of the thermoplastic material, but not that of the backing strip.

At this point a brief time period must lapse, depending on the materials used, in order to allow the film to melt and penetrate inside the fibres of the article. At the end of this operation the presser plate 80 moves back upwards together with the backing strip 2210, leaving the thermoplastic material on the article.

Preferably, a locating system 90 is provided in the region of the station 300 and supports the template during the pressing operation. This system is formed by an actuator 98, realized as a pneumatic piston, or other mechanism situated underneath the template which is pressed upwards so as to counteract the thrust of the presser plate and prevent flexing of the template and any defects during application of the thermoplastic strip.

Following application of the thermoplastic film, the latter is cooled for a suitable cooling time, preferably by operating the table 9 so as to bring the template 3 with tubular element 70 to which the film has been applied opposite a cooling station 400 situated between the film application station 300 and the cutting station 500. Cooling may also be performed inside the application or cutting station, but to detriment of the production efficiency.

In the cutting station 400 there is a machine for performing a cut 2221 in the textile material, inside the zone where the thermoplastic material 2220 is applied.

According to a preferred embodiment the cutting machine is of the laser type and therefore is designed to perform a clean cut 2221 in the tubular element 70 (Fig. 5b).

Although not shown, it is envisaged that the cutting machine may be of the ultrasound type.

Operation of the cutting machine is controlled by the said electronic means 1000 and may be controlled so as to perform the cut in a different manner depending on the size and/or the aesthetic requirements.

With the configuration described, the operating principle of the apparatus is as follows:
- the apparatus is prepared with at least one template 3 in the loading station 100;
- loading of the tubular element 70 is started by inserting the first section on the template 3;
- the two loading rollers 5,6 are operated so as to bring them into a lowered position in contact with the opposite surfaces of the template 3 and therefore with the tubular element 70 and simultaneously cause them to rotate so as to draw the tubular element 70 towards the vertical axis Z-Z;
- once the correct insertion position of the tubular element 70 on the template 3 has been reached, with the central part 71 of the tubular element positioned at the central part of the template;
- rotation of the loading rollers 5,6 is stopped and the latter are returned into their rest position spaced from the template 3;
- the strip 2200 is fed so as to bring a section thereof with a predefined length between the presser 8 and the tubular element 70 arrival zone in the station 300 for applying a film strip;
- the rotating table 11 is operated so that it performs a rotation corresponding to the angular distance existing between the loading station and the station 300 for applying the thermoplastic strip 2220 onto the central part 71 of the tubular element 70;
- the presser plate 80 is operated (Fig. 5a) so as to bring it into the lowered position where it presses the film 2200 against the central part 71 of the tubular element 70 and the heating resistances are energized;
- a predefined heating period is allowed to lapse so as to cause melting of the thermoplastic strip 2220;
- the resistances are switched off and the presser plate 80 is operated in the opposite direction so as to bring it back into the raised rest position;
- the table 11 is operated so as to rotate through an angle corresponding to the angular distance existing between the station 300 for applying the strip 2220 and the cooling station 400;
- the cooling time period is allowed to lapse;
- the table 11 is operated so as to rotate through an angle corresponding to the angular distance existing between the cooling station 400 and the cutting station 500;
- the cutting device is operated so as to cut the tubular element 70 in the zone 71 (Fig. 5b) situated within the thermoplastic strip 2220 applied with formation of a pantyhose having a body piece without stitching;
- the table 11 is operated so as to rotate through an angle corresponding to the angular distance existing between the cutting station 500 and the unloading station 600;
- the pantyhose is unloaded from the template (3);
- the table 11 is operated so as to rotate through an angle corresponding to the angular distance existing between the unloading station 600 and the loading station 100, preparing the apparatus for a new cycle.

As shown in Figure 5c, the finished tubular element 70 with longitudinal cut 2221 may be folded so as to form a pantyhose, the legs of which are formed by the two tubular sections 70 situated opposite with respect to the central part 71 and the body piece of which is formed by the same central part 71 open at the top by the cut 2221 and having elasticity provided by the thermoplastic material which has been applied.

According to a preferred embodiment of the method it is envisaged that, during the strip pressing step, the locating element 90 is activated and is brought into contact with the bottom surface of the template so as to counter any flexing of the latter caused by the thrust of the presser plate.

It is envisaged moreover that, after the first rotation, the method may be carried out continuously inserting a tubular element 70 onto a template 3 present in each case in the loading station 100 and thus reducing the downtime of the machine. Preferably there are six stations with a relative angular distance of 60°.

It is envisaged that the sixth station is a station 200 arranged between the loading station 100 and the station 300 for applying the strip 2220 and designed to allow auxiliary operations to be performed on the tubular element, such as automatic centring adjustment in order to compensate for any operator errors.

The further aspects of the method for manufacturing the pantyhose and transferring the semifinished products not described in the present description and not derived from particular characteristics of the apparatus as described above are to be regarded as being of the type conventional per se.

From the above description it is clear how the apparatus and the method according to the invention achieve the predefined objects.

As a result of the invention it is possible in fact to produce high-quality pantyhose substantially without any stitching on the body piece.

In addition to the above, with the invention it is possible to produce pantyhose in a simple and/or rapid and/or automatic manner.

With the invention, moreover, it is possible to reduce the production rejects and/or obtain a high degree of precision and/or repeatability in the characteristics of the pantyhose produced.

Finally, the invention is constructionally simple and/or strong and/or low-cost.

Although the subject of the invention has been described with particular reference to the attached figures, the reference numbers used in the description and in the claims are used so that the invention may be more easily understood and do not limit in any way the scope of protection claimed.

All the details may be replaced by other technically equivalent elements and the materials may be different depending on requirements, without departing from the scope of protection of the present invention.

Moreover the apparatus may be realized with a different number of stations which may be required in order to perform further processing operations on the article and, correspondingly, it is sufficient to vary the angle of rotation of the table 2 between adjacent stations. The cutting element formed by a laser may advantageously perform ornamental incisions in the pantyhose, in addition to the cut.

The invention thus devised may be subject to numerous modifications and variations, all of which fall within the inventive idea expressed in the accompanying claims.

## Claims

1. Apparatus for producing a pantyhose having a body piece without stitching, from a tubular textile article (70) extending in a longitudinal lengthwise direction (X-X) and comprising a substantially central part (71) designed to form the body piece of the pantyhose, the apparatus comprising:
-) at least one fixed frame (1);
-) at least one table (2) supporting a plurality of templates (3), movable so as to position one of said templates (3) at a plurality of processing stations comprising:
-) at least one station (100) provided with means (5, 6) for loading and positioning the tubular textile article on one of said templates (3);
-) at least one station (600) for unloading the pantyhose;
-) at least one cutting station (500) provided with a cutting apparatus;
**characterized in that** said plurality of stations comprises:
-) at least one film strip application station (300) having an associated film application device (2000) for applying in the longitudinal direction (X-X) a strip of a thermoplastic film (2220) on the central part (71) of the tubular article (70), the film application device (2000) comprising a device (80) for heat-pressing the film strip (2220) and means for feeding a film strip (2200) with a predefined length between the device (80) for heat-pressing the film strip (2220) and the tubular element (70) arrival zone in the film strip application station (300);
and **in that** the apparatus is configured such that the cutting apparatus of the cutting station (500) is arranged for performing a longitudinal cut (2221) of the tubular article (70) on the thermoplastic film strip (2220), when the tubular article (70) with the film strip (2220) applied thereon is loaded on a template positioned in the cutting station (500) by the movable table (2).

2. Apparatus according to Claim 1, **characterized in that** said plurality of templates (3) fixed to the table are arranged radially and angularly spaced from each other, and
the table can be operated rotationally by a drive unit (4), so as to position one of said templates at said processing stations.

3. Apparatus according to Claim 1, **characterized in that** it is rectilinear.

4. Apparatus according to any one of the preceding claims, **characterized in that** said means for loading the pantyhose on a template (3) comprise devices (13,15) for automatically loading the pantyhose on the templates (3) arranged at the loading station (100) and comprising a pair of rollers (5,6) with a horizontal axis (Y-Y) respectively designed to be positioned above and below the template (3), able to be rotationally actuated and movable from a position separated from the template (3) to a position making contact with the said template (3).

5. Apparatus according to any one of the preceding claims, **characterized in that** the means for feeding the film strip (2220) compris**e** a reel (2007) which carries the film (2200) and at least one motorized reel (2016) for retrieving the film (2200) and rollers (2002) for guiding the film along its path.

6. Apparatus according to any one of the preceding claims, **characterized in that** said heat-pressing device (8) comprises a presser plate (80) movable upon actuation of an actuator (17) from a raised position spaced from the template (3) into a lowered position pressing against the said template.

7. Apparatus according to the preceding claim, **characterized in that** the presser plate (80) is provided with heating means, such as electrical resistances or the like for melting the thermoplastic film strip (2220).

8. Apparatus according to the preceding claim, **characterized in that** said film is fed coupled with a backing strip (2210) by feeding means (2000), the means for heating the presser plate (80) being deigned to melt the thermoplastic film strip (2220), but not the backing strip (2210).

9. Apparatus according to any one of the preceding claims, **characterized in that** the station (300) for applying the film (2200) comprises a locating system (90) arranged below the template (3) and able to be actuated towards/away from the latter by means of an actuator (98), the system being designed to counteract the pressing action of the heat-pressing device so as to prevent flexing of the template during pressing.

10. Apparatus according to any one of the preceding claims, **characterized in that** said apparatus for performing cutting in the longitudinal direction of the tubular article (70) consists of a laser machine or of an apparatus with an ultrasound cutting blade.

11. Apparatus according to any one of the preceding claims, **characterized in that** it comprises optical, electromagnetic and/or similar devices for recognizing correct positioning of the textile article and controlling the processing steps by control and command means (1000) of the electronic type.

12. Apparatus according to any one of the preceding claims, **characterized in that** it comprises a cooling station (400) between said station (300) for applying a thermoplastic film and said cutting station (500).

13. Method for producing a pantyhose having a body piece without stitching, from a tubular textile article (70) extending in a longitudinal lengthwise direction (x-x) and comprising a substantially central part (71) designed to form the body piece of the pantyhose, **characterized in that** it comprises the following steps:
- loading and positioning the tubular textile article on a template (3) fixed to a movable table, at a loading station (100) of a pantyhose forming machine;
-) feeding a strip of thermoplastic film (2220) to a station for applying in the longitudinal direction (X-X) the thermoplastic film strip (2220) onto the central part (71) of the tubular article (70);
-) operating the table so as to position the template (3) with the loaded tubular article (70) at the station (300) for applying the thermoplastic strip (2220);
- operating a device (80) for heat-pressing the thermoplastic film strip (2200) so as to apply the thermoplastic film strip (2220) on the central part (71) of the tubular element (70);
-) cooling the thermoplastic film applied to the central part (71) of the tubular element (70);
-) operating the table (11) so as to move the template (3) with the tubular article to a cutting station provided with a cutting apparatus for performing a longitudinal cut (2221) of the tubular article (70) on the strip (2220) of thermoplastic film;
-) operating the cutting apparatus so as to cut the tubular element in the zone of the thermoplastic film applied with formation of the pantyhose;
-) unloading the pantyhose from the template (3).

14. Method according to Claim 13, **characterized in that** a plurality of templates (3) fixed to the table are radially arranged and angularly spaced from each other, and
the table is operated rotationally by a drive unit (4), so as to position one of said templates at a said processing stations.

15. Method according to either one of Claims 13 and 14, **characterized in that** the step for loading and positioning the tubular article on a template (3) is performed by devices (13,15) for automatically loading the pantyhose onto the templates (3) arranged at the loading station (100) and comprising a pair of rollers with a horizontal axis (Y-Y), wherein during said loading step said rollers (5,6) are respectively positioned above and below the template (3), being moved from a position separated from the template (3) to a position making contact with the said template (3) and actuated rotationally so as to load and position the tubular article (70).

16. Method according to any one of Claims 13 to 15, **characterized in that** the step of feeding the thermoplastic film (2220) is performed by means (2000) for feeding the film (2220) comprising a reel (2007) which carries the film (2220) and at least one motorized reel (2016) for retrieving the film (2220) and rollers (2002) for guiding the film along its path.

17. Method according to any one of Claims 13 to 16, **characterized in that** said heat-pressing device (80) comprises a presser plate (80) which during said film application step is moved upon actuation of an actuator (17) from a raised position spaced from the template (3) into a lowered position pressing against the said template.

18. Method according to claim 17, **characterized in that** the presser plate (80) is provided with heating means, such as electric resistances or the like which cause the thermoplastic strip (2220) to melt during said step of applying the film onto the tubular element (70).

19. Method according to either one of Claims 17 and 18, **characterized in that** said film is fed coupled with a backing strip (2210) by feeding means (2000), the means for heating the presser plate (80) being designed to melt the thermoplastic film strip (2220), but not the backing strip (2210).

20. Method according to any one of Claims 13 to 19, **characterized in that**, during application of the thermoplastic strip (2220), a locating system (90) arranged underneath the template (3) is actuated towards the latter by means of an actuator (98), so as to counteract the thrust of the heat-presser device and prevent flexing of the template during pressing.

21. Method according to any one of Claims 13 to 20, **characterized in that** said cut in the longitudinal direction of the tubular article (70) is performed by a laser machine or by an apparatus with an ultrasound cutting blade.

22. Method according to any one of Claims 13 to 21, **characterized in that** electronic control and command means (1000) recognize correct positioning of the tubular article by means of optical, electromagnet and/or similar devices and control the processing steps.

23. Method according to either one of claims 13 to 22 **characterized in that** said film cooling step is performed by moving the table so as to bring the template (3) with tubular article from the station (200) for applying the thermoplastic strip to a cooling station (300) before said cutting station (500).

## Patentansprüche

1. Vorrichtung zum Herstellen einer Strumpfhose mit einem Körperstück ohne Nähte aus einem rohrförmigen Textilartikel (70), der sich in einer longitudinalen Längsrichtung (X-X) erstreckt und einen im wesentlichen zentralen Teil (71) umfasst, der ausgebildet ist, das Körperstück der Strumpfhose zu bilden, wobei die Vorrichtung umfasst:
-) zumindest einen festen Rahmen (1);
-) zumindest einen eine Vielzahl von Schablonen (3) tragenden Tisch (2), der bewegbar ist, um eine der genannten Schablonen (3) an einer Vielzahl von Bearbeitungsstationen zu positionieren, umfassend:
-) mindestens eine Station (100), die mit Einrichtungen (5, 6) zum Laden und Positionieren des rohrförmigen Textilartikels auf einer der genannten Schablonen (3) ausgestattet ist;
-) mindestens eine Station (600) zum Entladen der Strumpfhose;
-) mindestens eine Schneidstation (500), die mit einem Schneidgerät ausgestattet ist;
**dadurch gekennzeichnet, dass** die genannte Vielzahl von Stationen umfasst:
-) mindestens eine Folienstreifenauftragungsstation (300) mit einem zugehörigen Folienauftragungsgerät (2000) zum Aufbringen eines Streifens einer thermoplastischen Folie (2220) in longitudinaler Richtung (X-X) auf den zentralen Teil (71) des rohrförmigen Artikels (70), wobei das Folienauftragungsgerät (2000) ein Gerät (80) zum Hitzepressen des Folienstreifens (2220) und Einrichtungen zum Zuführen eines Folienstreifens (2200) mit einer vordefinierten Länge zwischen dem Gerät (80) zum Hitzepressen des Folienstreifens (2220) und der Ankunftszone des rohrförmigen Elements (70) in der Folienstreifenauftragungsstation (300) umfasst; und dass die Vorrichtung derart eingerichtet ist, dass das Schneidgerät der Schneidstation (500) angeordnet ist, um einen Längsschnitt (2221) des rohrförmigen Artikels (70) auf dem thermoplastischen Folienstreifen (2220) durchzuführen, wenn der rohrförmige Artikel (70) mit dem darauf aufgebrachten Folienstreifen (2220) auf eine in der Schneidstation (500) durch den beweglichen Tisch (2) positionierte Schablone geladen wird.

2. Vorrichtung nach Anspruch 1, **dadurch gekennzeichnet, dass** die genannte Vielzahl von auf dem Tisch fixierten Schablonen (3) radial und winkelig von einander beabstandet angeordnet sind und der Tisch mittels einer Antriebseinheit (4) drehend betrieben werden kann, um eine der genannten Schablonen in den genannten Bearbeitungsstationen zu positionieren.

3. Vorrichtung nach Anspruch 1, **dadurch gekennzeichnet, dass** sie geradlinig verläuft.

4. Vorrichtung nach einem der vorherigen Ansprüche, **dadurch gekennzeichnet, dass** die genannten Einrichtungen zum Laden der Strumpfhose auf einer Schablone (3) Geräte (13, 15) zum automatischen Laden der Strumpfhose auf die Schablonen (3) umfassen, wobei die Geräte in der Ladestation (100) angeordnet sind und ein Paar Rollen (5, 6) mit einer horizontalen Achse (Y-Y) umfassen, welche entsprechend ausgebildet sind, um unter und über der Schablone (3) positioniert zu werden, wobei die Rollen geeignet sind, um drehbar betätigt zu werden und von einer von der Schablone (3) getrennten Position in eine mit der genannten Schablone (3) kontaktherstellenden Position bewegbar sind.

5. Vorrichtung nach einem der vorherigen Ansprüche, **dadurch gekennzeichnet, dass** die Vorrichtungen zum Zuführen der Folienstreifen (2220) eine Trommel (2007), welche die Folie (2000) trägt, und zumindest ein motorisierte Trommel (2016) zum Zurückziehen der Folie (2200), und Rollen (2002) zum Führen der Folie entlang ihrer Bahn umfasst.

6. Vorrichtung nach einem der vorherigen Ansprüche, **dadurch gekennzeichnet, dass** das genannte Heizpressgerät (8) eine bewegliche Drückerplatte (80) umfasst, die bei Betätigung eines Stellgliedes (17) von einer von der Schablone (3) beabstandeten erhöhten Position in eine gesenkte Position gegen die genannte Schablone drückt.

7. Vorrichtung nach dem vorherigen Anspruch, **dadurch gekennzeichnet, dass** die Drückerplatte (80) mit Heizeinrichtungen ausgestattet ist, wie elektrische Widerstände oder dergleichen zum Schmelzen des thermoplastischen Folienstreifens (2220).

8. Vorrichtung nach dem vorherigen Anspruch, **dadurch gekennzeichnet, dass** die genannte Folie mit einem gekoppelten Unterstützungsstreifen (2210) mittels der Zuführeinrichtungen (2000) zugeführt wird, wobei die Einrichtungen zur Erhitzung der Drückerplatte (80) ausgebildet sind, um den thermoplastischen Folienstreifen (2220), nicht aber den Unterstützungsstreifen (2210) zu schmelzen.

9. Vorrichtung nach einem der vorherigen Ansprüche, **dadurch gekennzeichnet, dass** die Station (300) zum Aufbringen der Folie (2200) ein Ortungssystem (90) umfasst, welches unter der Schablone (3) angeordnet ist und geeignet ist, um zu/weg von der Letztgenannten betätigt zu werden, mittels Stelleinrichtungen (98), wobei das System ausgebildet ist den Pressvorgang des Heißpressgeräts entgegenzuwirken, um ein Biegen der Schablone während des Pressen zu verhindern.

10. Vorrichtung nach einem der vorherigen Ansprüche, **dadurch gekennzeichnet, dass** genannte Vorrichtung zur Durchführung des Schneidens in der longitudinalen Richtung des rohrförmigen Artikels (70) aus einer Lasermaschine oder einer Vorrichtung mit einer Ultraschallschneidklinge besteht.

11. Vorrichtung nach einem der vorherigen Ansprüche, **dadurch gekennzeichnet, dass** sie optische, elektromagnetische und/oder ähnliche Geräte zur Erkennung der korrekten Positionierung des Textilartikels und Steuerung der Bearbeitungsschritte mittels Steuerungs- und Anweisungsvorrichtungen (1000) elektronischer Art umfasst.

12. Vorrichtung nach einem der vorherigen Ansprüche, **dadurch gekennzeichnet, dass** sie eine Kühlstation (400) zwischen der genannten Station (300) zum Aufbringen einer thermoplastischen Folie und der genannten Schneidestation (500) umfasst.

13. Verfahren zur Herstellung einer Strumpfhose mit einem Körperstück ohne Naht aus einem rohrförmigen Textilartikel (70), der sich in einer longitudinalen Längsrichtung (X-X) erstreckt und einen im wesentlichen zentralen Teil (71) umfasst, der ausgebildet ist, das Körperstück der Strumpfhose zu bilden, **gekennzeichnet durch** die nachfolgenden Schritte:
-) Laden und Positionieren des rohrförmigen Textilartikels (70) auf einer auf einem beweglichen Tisch (2) befestigten Schablone (3), auf einer Ladestation (100) einer Strumpfhose bildenden Maschine;
-) Zuführen eines Streifens von thermoplastischer Folie (2220) zu einer Station zum Aufbringen des thermoplastischen Folienstreifens (2220) in der longitudinalen Richtung auf den zentralen Teil (71) des Textilartikels (70);
-) Betätigen des Tisches, um die Schablone (3) mit dem geladenen rohrförmigen Artikel (70) in der Station (300) zum Aufbringen des thermoplastischen Streifens (2220) zu positionieren;
-) Betätigen eines Gerätes (80) zum Heißpressen des thermoplastischen Folienstreifens (2200), um den thermoplastischen Folienstreifen auf dem zentralen Teil (71) des rohrförmigen Elements (70) aufzubringen;
-) Kühlen der auf dem zentralen Teil (71) des rohrförmigen Elements (70) aufgetragenen thermoplastischen Folie;
-) Betätigen des Tisches (11), um die Schablone (3) mit dem rohrförmigen Artikel zu einer mit einer Schneidvorrichtung, zur Durchführung eines longitudinalen Schnittes (2221) des rohrförmigen Artikels (70) auf dem Streifen (2220) der thermoplastischen Folie, ausgestatten Schneidestation zu bewegen;
-) Betätigen der Schneidevorrichtung, um das rohrförmige Element in der Zone der aufgebrachten thermoplastischen Folie zur Bildung der Strumpfhose zu zerschneiden;
-) Abladen der Strumpfhose von der Schablone (3).

14. Verfahren nach Anspruch 13, **dadurch gekennzeichnet, dass** eine Vielzahl von auf dem Tisch fixierten Schablonen (3) radial und winkelig von einander beabstandet angeordnet sind und der Tisch mittels einer Antriebseinheit (4) drehend betrieben werden kann, um eine der genannten Schablonen in den genannten Bearbeitungsstationen zu positionieren.

15. Verfahren nach einem Anspruch 13 oder 14, **dadurch gekennzeichnet, dass** der Schritt des Ladens und Positionierens des rohrförmigen Artikels auf einer Schablone (3) mittels Geräten (13, 15) zum automatischen Laden der Strumpfhose auf die Schablone (3) durchgeführt wird, wobei die Geräte in der Ladestation (100) angeordnet sind und ein Paar Rollen mit einer horizontalen Achse (Y-Y) umfassen, wobei während des genannten Ladeschrittes die genannten Rollen (5, 6) entsprechend über und unter der Schablone (3) positioniert werden, wobei die Rollen von einer von der Schablone (3) getrennten Position in eine mit der genannten Schablone (3) Kontakt herstellenden Position bewegt und drehbar betätigt werden, um den rohrförmigen Artikel (70) zu laden und zu positionieren.

16. Verfahren nach einem der Ansprüche 13 bis 15, **dadurch gekennzeichnet, dass** der Schritt des Zuführens der thermoplastischen Folie (2220) mittels Einrichtungen (2000) zum Zuführen der Folie (2220) durchgeführt wird, welche eine Trommel (2007), welche die Folie (2220) trägt, und zumindest eine motorisierte Trommel (2016) zum Zurückziehen der Folie (2220) und Rollen (2002) zum Führen der Folie entlang ihrer Bahn umfassen.

17. Verfahren nach einem der Ansprüche 13 bis 16, **dadurch gekennzeichnet, dass** das genannte Heizpressgerät (8) eine Drückerplatte (80) umfasst, welche während des genannten Folienauftragungsschrittes bei Betätigung eines Stellgliedes (17) von einer von der Schablone (3) beabstandeten erhöhten Position in eine gesenkte Position gegen die genannte Schablone drückt.

18. Verfahren nach Anspruch 17, **dadurch gekennzeichnet, dass** die Drückerplatte (80) mit Heizeinrichtungen ausgestattet ist, wie elektrische Widerstände oder dergleichen, welche verursachen, dass der thermoplastische Streifen (2220) während des genannten Schrittes des Aufbringens der Folie auf das rohrförmige Element (70) schmilzt.

19. Verfahren nach Anspruch 17 oder 18, **dadurch gekennzeichnet, dass** die genannte Folie mit einem gekoppelten Unterstützungsstreifen (2210) mittels Zuführeinrichtungen (2000) zugeführt wird, wobei die Einrichtungen zur Erhitzung der Drückerplatte (80) ausgebildet sind, um den thermoplastischen Folienstreifen (2220), nicht aber den Unterstützungsstreifen (2210) zu schmelzen.

20. Verfahren nach einem der Ansprüche 13 bis 19, **dadurch gekennzeichnet, dass** während des Auftragens des thermoplastischen Streifens (2220) ein unter der Schablone (3) angeordnetes Ortungssystem (90) gegenüber Letztgenanntem mittels eines Stellgliedes (98) betätigt wird, um dem Schub des Heißpressgerätes (80) entgegenzuwirken und ein Biegen der Schablone während des Pressen zu verhindern.

21. Verfahren nach einem der Ansprüche 13 bis 20, **dadurch gekennzeichnet, dass** der genannte Schnitt in der longitudinalen Richtung des rohrförmigen Artikels (70) mittels einer Lasermaschine oder mittels einer Vorrichtung mit einer Ultraschallschneidklinge durchgeführt wird.

22. Verfahren nach einem der Ansprüche 13 bis 21, **dadurch gekennzeichnet, dass** elektronische Steuerungs- und Anweisungseinrichtungen (1000) eine korrekte Positionierung der rohrförmigen Artikel mittels Einrichtungen von optischen, elektromagnetischen und/oder ähnlichen Geräten erkannt wird und die Bearbeitungsschritte steuern.

23. Verfahren nach einem der Ansprüche 13 bis 22, **dadurch gekennzeichnet, dass** der genannte Folienkühlungsschritt mittels der Bewegung des Tisches durchgeführt wird, um die Schablone (3) mit dem rohrförmigen Artikel von der Station (200) zum Aufbringen des thermoplastischen Streifens, vor der genannten Schneidestation (500), zu einer Kühlstation (300) gebracht wird.

## Revendications

1. Appareil pour produire un collant comportant une pièce de corps sans couture, à partir d'un article (70) de textile tubulaire s'étendant dans une direction de longueur longitudinale (X-X) et comprenant une partie sensiblement centrale (71) conçue pour former la pièce de corps du collant, l'appareil comprenant :
-) au moins un bâti fixe (1) ;
-) au moins une table (2) supportant plusieurs gabarits (3), mobile de façon à positionner l'un desdits gabarits (3) au niveau de plusieurs postes de traitement comprenant :
-) au moins un poste (100) pourvu de moyens (5, 6) destinés à charger et à positionner l'article de textile tubulaire sur l'un desdits gabarits (3) ;
-) au moins un poste (600) de déchargement du collant ;
-) au moins un poste de coupe (500) pourvu d'un appareil de coupe ;
**caractérisé en ce que** lesdits plusieurs postes comprennent :
-) au moins un poste (300) d'application de bande de film comportant un dispositif (2000) associé d'application de film destiné à appliquer, dans la direction longitudinale (X-X), une bande d'un film thermoplastique (2220) sur la partie centrale (71) de l'article tubulaire (70), le dispositif (2000) d'application de film comprenant un dispositif (80) de pressage à chaud de la bande de film (2220) et un moyen destiné à avancer une bande de film (2200) sur une longueur prédéterminée entre le dispositif (80) de pressage à chaud de la bande de film (2220) et la zone d'arrivée d'élément tubulaire (70) dans le poste (300) d'application de bande de film ;
et **en ce que** l'appareil est conçu de sorte que l'appareil de coupe du poste (500) de coupe soit disposé de façon à effectuer une coupe longitudinale (2221) de l'article tubulaire (70) sur la bande de film thermoplastique (2220), lorsque l'article tubulaire (70) avec la bande de film (2220) lui étant appliquée dessus, est chargé sur un gabarit positionné dans le poste (500) de coupe par la table mobile (2).

2. Appareil selon la revendication 1, **caractérisé en ce que** lesdits plusieurs gabarits (3) fixés à la table sont disposés radialement et angulairement espacés les uns des autres, et **en ce que** la table peut être mue de manière tournante par une unité d'entraînement (4), de façon à positionner l'un desdits gabarits au niveau desdits postes de traitement.

3. Appareil selon la revendication 1, **caractérisé en ce que** ce dernier est rectiligne.

4. Appareil selon l'une quelconque des revendications précédentes, **caractérisé en ce que** lesdits moyens de chargement du collant sur un gabarit (3) comprennent des dispositifs (13, 15) destinés à charger automatiquement le collant sur les gabarits (3) disposés au niveau du poste (100) de chargement et comprennent une paire de rouleaux (5, 6) ayant un axe horizontal (Y-Y) conçus respectivement pour se trouver positionnés au-dessus et en-dessous du gabarit (3), pouvant être actionnés en rotation et être mobiles d'une position séparée du gabarit (3) à une position établissant un contact avec ledit gabarit (3).

5. Appareil selon l'une quelconque des revendications précédentes, **caractérisé en ce que** les moyens destinés à avancer la bande de film (2220) comprennent une bobine (2007) qui porte le film (2200) et au moins une bobine motorisée (2016) destinée à extraire le film (2200) ainsi que des rouleaux (2002) destinés à guider le film le long de son trajet.

6. Appareil selon l'une quelconque des revendications précédentes, **caractérisé en ce que** ledit dispositif de pressage à chaud (8) comprend une plaque de presse (80) mobile lors de l'actionnement d'un actionneur (17) d'une position élevée espacée du gabarit (3) à une position abaissée en appui contre ledit gabarit.

7. Appareil selon la revendication précédente, **caractérisé en ce que** la plaque de presse (80) est dotée de moyens chauffants, tels que de résistances électriques, ou analogues, destinés à faire fondre la bande de film thermoplastique (2220).

8. Appareil selon la revendication précédente, **caractérisé en ce que** ledit film est avancé de manière couplée avec une bande de support (2210) par des moyens d'avance (2000), les moyens destinés à chauffer la plaque de presse (80) étant conçu pour faire fondre la bande de film thermoplastique (2220), mais pas la bande de support (2210).

9. Appareil selon l'une quelconque des revendications précédentes, **caractérisé en ce que** le poste (300) d'application du film (2200) comprend un système de positionnement (90) disposé en-dessous du gabarit (3) et pouvant être actionné de façon à s'approcher/s'écarter de ce dernier au moyen d'un actionneur (98), le système étant conçu pour compenser l'action de pression du dispositif de pressage à chaud de façon à empêcher une flexion du gabarit pendant le pressage.

10. Appareil selon l'une quelconque des revendications précédentes, **caractérisé en ce que** ledit appareil destiné à effectuer une coupe dans la direction longitudinale de l'article tubulaire (70) est constitué d'une machine à laser ou d'un appareil à lame de coupe par ultrasons.

11. Appareil selon l'une quelconque des revendications précédentes, **caractérisé en ce qu'**il comprend des dispositifs optiques, électromagnétiques et/ou des dispositifs similaires destinés à reconnaître un positionnement correct de l'article textile et à commander les étapes de traitement par un moyen (1000) de commande et d'instruction de type électronique.

12. Appareil selon l'une quelconque des revendications précédentes, **caractérisé en ce qu'**il comprend un poste (400) de refroidissement situé entre ledit poste (300) d'application d'un film thermoplastique et ledit poste (500) de coupe.

13. Procédé pour produire un collant comportant une pièce de corps sans couture, à partir d'un article de textile tubulaire (70) s'étendant dans une direction de longueur longitudinale (X-X) et comprenant une partie sensiblement centrale (71) conçue pour former la pièce de corps du collant, **caractérisé en ce qu'**il comprend les étapes suivantes consistant à :
-) charger et positionner l'article de textile tubulaire sur un gabarit (3) fixé à une table mobile, au niveau d'un poste (100) de chargement d'une machine de formation de collant ;
-) avancer une bande de film thermoplastique (2220) vers un poste de façon à appliquer, dans la direction longitudinale (X-X), la bande de film thermoplastique (2220) sur la partie centrale (71) de l'article tubulaire (70) ;
-) actionner la table de façon à positionner le gabarit (3) avec l'article tubulaire chargé (70) au niveau du poste (300) d'application de la bande thermoplastique (2220) ;
-) actionner un dispositif (80) destiné à presser à chaud la bande de film thermoplastique (2200) de façon à appliquer la bande de film thermoplastique (2220) sur la partie centrale (71) de l'élément tubulaire (70) ;
-) refroidir le film thermoplastique appliqué sur la partie centrale (71) de l'élément tubulaire (70) ;
-) actionner la table (11) de façon à déplacer le gabarit (3) avec l'article tubulaire vers un poste de coupe pourvu d'un appareil de coupe destiné à effectuer une coupe longitudinale (2221) de l'article tubulaire (70) sur la bande (2220) de film thermoplastique ;
-) actionner l'appareil de coupe de façon à couper l'élément tubulaire dans la zone de film thermoplastique appliqué pour la formation du collant ;
-) décharger le collant du gabarit (3).

14. Procédé selon la revendication 13, **caractérisé en ce que** plusieurs gabarits (3) fixés à la table sont disposés espacés radialement et angulairement les uns par rapport aux autres, et **en ce que** la table est actionnée de manière tournante par une unité d'entraînement (4), de façon à positionner l'un desdits gabarits au niveau de l'un desdits postes de traitement.

15. Procédé selon l'une ou l'autre des revendications 13 et 14, **caractérisé en ce que** l'étape de chargement et de positionnement de l'article tubulaire sur un gabarit (3) est effectuée par des dispositifs (13, 15) destinés à charger automatiquement le collant sur les gabarits (3) disposés au niveau du poste (100) de chargement et comprenant une paire de rouleaux ayant un axe horizontal (Y-Y), dans lequel, lors de ladite étape de chargement, lesdits rouleaux (5, 6) sont positionnés respectivement au-dessus et en-dessous du gabarit (3), en étant amenés d'une position séparée du gabarit (3) à une position établissant un contact avec ledit gabarit (3) et sont mis en oeuvre de façon rotative pour charger et positionner l'article tubulaire (70).

16. Procédé selon l'une quelconque des revendications 13 à 15, **caractérisé en ce que** l'étape d'avance du film thermoplastique (2220) est exécutée par des moyens (2000) destinés à avancer le film (2220) comprenant une bobine (2007) qui porte le film (2220) et au moins une bobine motorisée (2016) destinée à extraire le film (2220) ainsi que des rouleaux (2002) destinés à guider le film le long de son trajet.

17. Procédé selon l'une quelconque des revendications 13 à 16, **caractérisé en ce que** ledit dispositif de pressage à chaud (80) comprend une plaque de presse (80) qui, lors de ladite étape d'application de film, est déplacée lors de l'actionnement d'un actionneur (17), d'une position élevée espacée du gabarit (3) à une position abaissée en appui contre ledit gabarit.

18. Procédé selon la revendication 17, **caractérisé en ce que** la plaque de presse (80) est pourvue de moyens chauffants, tels que de résistances électriques, ou analogues, qui provoquent une fonte de la bande thermoplastique (2220) lors de ladite étape d'application du film sur l'élément tubulaire (70).

19. Procédé selon l'une ou l'autre des revendications 17 et 18, **caractérisé en ce que** ledit film est avancé de manière couplée avec une bande de support (2210) par des moyens d'avance (2000), les moyens de chauffe de la plaque de presse (80) étant conçus pour faire fondre la bande de film thermoplastique (2220), mais pas la bande de support (2210).

20. Procédé selon l'une quelconque des revendications 13 à 19, **caractérisé en ce que**, pendant l'application de la bande thermoplastique (2220), un système de positionnement (90) disposé au-dessous du gabarit (3) est actionné de façon à s'approcher de ce dernier au moyen d'un actionneur (98), pour compenser la poussée du dispositif de pressage à chaud et empêcher une flexion du gabarit pendant le pressage.

21. Procédé selon l'une quelconque des revendications 13 à 20, **caractérisé en ce que** ladite coupe effectuée dans la direction longitudinale de l'article tubulaire (70) est effectuée par une machine à laser ou par un appareil doté d'une lame de coupe par ultrasons.

22. Procédé selon l'une quelconque des revendications 13 à 21, **caractérisé en ce que** le moyen (1000) de commande et d'instruction électronique reconnaît un positionnement correct de l'article tubulaire au moyen de dispositifs optiques, électromagnétiques et/ou de dispositifs similaires et commande les étapes de traitement.

23. Procédé selon l'une quelconque des revendications 13 à 22, **caractérisé en ce que** ladite étape de refroidissement de film est effectuée par déplacement de la table de façon à amener le gabarit (3) avec l'article tubulaire du poste (200) d'application de la bande thermoplastique à un poste (300) de refroidissement situé avant ledit poste (500) de coupe.
